Europäisches Patentamt

European Patent Office

Office européen des brevets

(11) Veröffentlichungsnummer: **0 498 244 A1**

## (12) EUROPÄISCHE PATENTANMELDUNG

(21) Anmeldenummer: **92101232.4**

(22) Anmeldetag: **27.01.92**

(51) Int. Cl.5: **B29B 7/76**

(30) Priorität: **07.02.91 DE 4103711**

(43) Veröffentlichungstag der Anmeldung:
**12.08.92 Patentblatt 92/33**

(84) Benannte Vertragsstaaten:
**CH DE FR GB IT LI**

(71) Anmelder: **BAYER AG**

**W-5090 Leverkusen 1 Bayerwerk(DE)**

(72) Erfinder: **Ersfeld, Heinrich**
**Biesenbach 23**
**W-5090 Leverkusen 3(DE)**

(54) **Mischkopf für die Herstellung eines fliessfähigen, massiven oder zelligen Kunststoff bildenden Reaktionsgemisches.**

(57) Das Blockieren des Reinigungskolbens (2) eines Mischkopfes zum Herstellen eines fließfähigen, massiven oder zelligen Kunststoff bildenden Reaktionsgemisches wird dadurch vermieden, daß man in der Wandung (6) der Mischkammerbohrung (3) Vertiefungen (7) in Form von mit Stegen (8) abwechselnden Ringnuten (7) vorsieht, in denen Reaktionsgemisch zu einer elastischen Masse (9) aushärtet.

FIG.1

EP 0 498 244 A1

Die Erfindung betrifft einen Mischkopf für die Herstellung eines fließfähigen, massiven oder zelligen Kunststoff bildenden Reaktionsgemisches, bestehend aus einem Gehäuse mit einer Mischkammerbohrung, in welcher ein Reinigungskolben geführt ist und in welche Einspritzöffnungen für die Reaktionskomponenten münden, wobei die Wandung der Mischkammerbohrung Vertiefungen aufweist.

Bei einem Mischkopf gemäß DE-C-1 282 522 (entsprechend US-A-3 263 928) dient der Reinigungskolben gleichzeitig der Freigabe der Einspritzöffnungen für den Mischvorgang, indem er in eine hintere Totpunktlage zurückgefahren wird. Nach beendetem Mischvorgang fährt der Reinigungskolben in die vordere Totpunktlage und stößt dabei die in der Mischkammerbohrung verbliebenen Gemischreste aus. Um eine ausreichende Gleitfähigkeit zu gewährleisten, werden bei der Fertigung Mischkammerbohrung und Reinigungskolben mit einem paßgenauen Spiel zwischen den Laufflächen hergestellt.

Dieser Gleitspalt zwischen Reinigungskolben und Mischkammerwandung füllt sich nach wiederholten Mischvorgängen mit ausgehärtetem Reaktionsgemisch, welches zu einem Film hochverdichteter Masse verpreßt wird. Mit der Zeit blockiert der sich im Gleitspalt aufbauende Materialfilm den Reinigungskolben. Er läßt sich dann nur durch Erhitzen des Mischkammergehäuses wieder verschiebbar machen, und die Mischkammerwandung muß anschließend gereinigt werden. Bei Reinigungskolben mit kleinem Durchmesser kann es zum Kolbenbruch kommen.

Um das Festfressen des Reinigungskolbens zu verhindern, hat man auch schon versucht, im Mantel des Reinigungskolbens Vertiefungen vorzusehen, welche sich in Umfangsrichtung überlappen (EP-B1-0 009 114). Diese Maßnahme schwächt den Reinigungskolben und macht ihn damit nur noch bruchanfälliger. Das aushärtende Material ragt aus den Vertiefungen in den Gleitspalt hinein, wodurch die Bildung eines den Gleitspalt ausfüllenden Gemischfilmes zwar nicht an der Wandung der Mischkammerbohrung, sondern auf der Mantelfläche des Reinigungskolbens zwischen den Vertiefungen begünstigt wird. Die Gefahr des Blockierens und des Bruchs des Reinigungskolbens wird also sogar gefördert.

Schließlich ist aus US-A-3 799 199 ein Mischkopf bekannt, dessen Reinigungskolben in seinem Mantel achsparallele Vertiefungen aufweist, welche am oberen und am unteren Ende des Reinigungskolbens jeweils durch eine sich über den Umfang erstreckende Vertiefung verbunden sind. Die achsparallelen Vertiefungen können auch in der Wandung der Mischkammerbohrung angeordnet sein. Auch bei dieser Ausführungsform ist die Gefahr des Blockierens nicht behoben, weil der Gemischfilm im Gleitspalt nicht in ausreichender Weise abgestreift wird.

Es besteht die Aufgabe, einen Mischkopf der eingangs genannten Art zu finden, bei welchem das Blockieren des Reinigungskolbens mit Sicherheit ausgeschlossen wird.

Diese Aufgabe wird dadurch gelöst, daß über die gesamte Länge der Mischkammerbohrung in deren Wandung - quer zur Achse der Mischkammerbohrung mit Stegen abwechselnd - Ringnuten angeordnet sind.

Überraschenderweise ergibt sich durch die Anordnung der Vertiefungen in der Wandung der Mischkammerbohrung anstelle im Reinigungskolben ein völlig anderer Effekt. Auch hier füllen sich die Vertiefungen schnellstens mit aushärtendem Gemisch, was darin haften bleibt. Durch eine besondere Geometrie der Vertiefungen, insbesondere ausreichende Tiefe, läßt sich die Haftung optimieren. Da die in den Vertiefungen ausgehärtete Masse eine gewisse Elastizität besitzt, wölbt sie sich bei Freigabe durch den Reinigungskolben in die Mischkammerbohrung hinein. Es handelt sich dabei zwar nur um wenige Zehntelmillimeter, aber beim nächsten Ausstoßhub des Reinigungskolbens schabt seine Stirnkante nicht nur diese herausstehende Wölbung ab, sondern reißt auch noch - dank dessen Elastizität - etwas Material aus den Vertiefungen heraus. Es handelt sich dabei um winzige Partikelchen, welche im Endprodukt keine Schadstellen verursachen, zumal sie erst am Ende des Mischvorganges erzeugt werden und, sofern ein Anguß vorhanden ist, dort verbleiben. Gleichzeitig wird beim Ausstoßhub der im Gleitspalt befindliche Gemischfilm in die im Material der Vertiefungen neu erzeugten Hohlräume abgestreift. Dieses neue Material härtet aus und wölbt sich beim Zurückfahren des Ausstoßkolbens in seine Mischstellung, welche der hinteren Totpunktlage entspricht, wieder in die Mischkammerbohrung hinein usw.

Die neue Ausführung ist besonders günstig, weil die Kanten der Stege als Abstreifkanten wirken. Auch andersartig gestaltete Vertiefungen sind möglich, wie beispielsweise Mulden. Wichtig ist dabei nur, daß die Vertiefungen einander in Umfangsrichtung der Gemischkammerbohrung zumindest tangieren, besser aber überlappen, damit über den gesamten Umfang ein Abstreifen des Gemischfilmes möglich ist. Dabei sind die Vertiefungen im Bereich der Einspritzöffnungen erforderlichenfalls zu unterbrechen, damit genügend Wandung um die Einspritzöffnungen herum vorhanden ist. Die Tiefe a und die Höhe b der Ringnuten sowie die Dicke c der Stege hängen natürliche vom Durchmesser des Reinigungskolbens bzw. dem Durchmesser der Mischkammerbohrung ab. Je größer dieser Durchmesser ist, desto größer sind die Abmessungen der Ringnuten und Stege.

Selbst wenn man die aus US-A-3 799 199 bekannten Ringnuten am oberen und am unteren Ende des Reinigungskolbens ebenfalls in die Wandung der Mischkammerbohrung verlegen würde, wird nicht der überraschende, neue Effekt erzielt, weil der Gemischfilm nicht in ausreichender Weise abgestreift würde.

Gute Ergebnisse lassen sich erzielen, wenn die Ringnuten eine Tiefe a von 0,5 bis 3 mm bei einer Höhe b von 1 bis 4 mm und die verbleibenden Stege eine Dicke c von 2 bis 8 mm aufweisen.

In der Zeichnung ist der neue Mischkopf in einem Ausführungsbeispiel rein schematisch im Schnitt dargestellt und nachstehend näher erläutert. Es zeigen:

Fig. 1 den Mischkopf mit dem Reinigungskolben in Reinigungsstellung,

Fig. 2 einen vergrößerten Abriß der Mischkammer des Mischkopfes mit dem Reinigungskolben in Reinigungsstellung und

Fig. 3 einen vergrößerten Abriß der Mischkammer ohne Reinigungskolben.

In einem Gehäuse 1 des Mischkopfes ist ein hydraulisch betätigbarer Reinigungskolben 2 angeordnet, welcher in einer Mischkammerbohrung 3 geführt ist. In die Mischkammerbohrung 3 münden Einspritzöffnungen 4, 5. In die Wandung 6 der Mischkammerbohrung 3 sind Vertiefungen 7 in Form von Ringnuten eingelassen, welche über die gesamte Länge der Mischkammerbohrung 3 mit stehengebliebenen Stegen 8 abwechseln, Der Durchmesser der Mischkammerbohrung 3 beträgt 20 mm, die Tiefe a der Ringnuten 7 3 mm, ihre Höhe b 2 mm und die Dicke c der Stege 8 beträgt 6 mm.

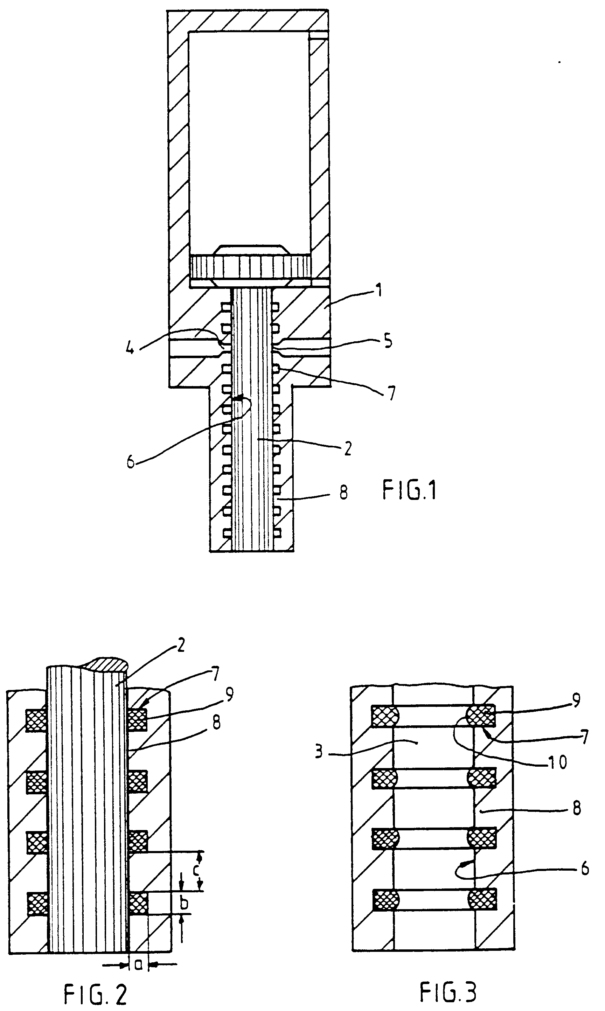

In Fig. 2 sind die Ringnuten 7 mit ausgehärtetem Material 9 gefüllt, welches aufgrund seiner Elastizität gegen den Reinigungskolben 2 drückt,

In Fig. 3 drückt das in den Ringnuten 7 befindliche Material 9 aufgrund seiner elastischen Ausdehnung in Form von Wölbungen 10 in die Mischkammerbohrung 3 hinein, weil der Reinigungskolben 2 zurückgefahren ist.

Die Funktionsweise ist folgende: Nach wenigen Mischvorgängen haben sich die Vertiefungen 7 mit ausgehärtetem Reaktionsgemisch gefüllt, welches fest darin haftet und eine elastische Masse bildet. Als Reaktionskomponenten werden beispielsweise Polyol und Isocyanat verwendet, welche zu Polyurethan aushärten.

Fährt der Reinigungskolben 2 aus der Reinigungsstellung in die Mischstellung zurück und gibt die Einspritzöffnungen 4 und 5 für den Eintritt der Reaktionskomponenten frei, so wölbt sich das in den Ringnuten 7 befindliche Material 9 aufgrund seiner Elastizität geringfügig über die Wandung 6 hinaus in die Mischkammerbohrung 3 hinein. Nach beendetem Mischvorgang fährt der Reinigungskolben 2 wieder in die Reinigungsstellung, stößt dabei das restliche Reaktionsgemisch aus und schabt die vorstehenden Wölbungen 10 ab, wobei gleichzeitig etwas Material aus den Vertiefungen 7 mit herausgerissen wird, so daß kleine Hohlräume entstehen. In diese Hohlräume hinein wird beim Zurückfahren des Reinigungskolbens 2 der im Gleitspalt vorhandene Gemischfilm abgestreift. Dieses neue Material verdichtet dort. Beim nächsten Hub des Reinigungskolbens 2 in die Mischstellung entstehen wieder die besagten Wölbungen 10 usw.

**Patentansprüche**

1. Mischkopf für die Herstellung eines fließfähigen, massiven oder zelligen Kunststoff bildenden Reaktionsgemisches, bestehend aus einem Gehäuse (1) mit einer Mischkammerbohrung (3), in welcher ein Reinigungskolben (2) geführt ist und in welche Einspritzöffnungen (4, 5) für die Reaktionskomponenten münden, wobei die Wandung (6) der Mischkammerbohrung (3) Vertiefungen (7) aufweist, dadurch gekennzeichnet, daß als Vertiefungen (7) über die gesamte Länge der Mischkammerbohrung (3) in deren Wandung (6) - quer zur Achse der Mischkammerbohrung (3) mit Stegen (8) abwechselnd - Ringnuten (7) angeordnet sind

2. Mischkopf nach Anspruch 1, dadurch gekennzeichnet, daß die Ringnuten (7) eine Tiefe a von 0,5 bis 3 mm bei einer Höhe b von 1 bis 4 mm und die verbliebenen Stege (8) eine Dicke c von 2 bis 8 mm aufweisen.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-U-8 912 468 (HELLBERG) --- | 1 | B29B7/76 |
| A | EP-A-0 095 107 (ELASTOGRAN) --- | | |
| A | EP-A-0 068 670 (GUSMER) ----- | | |

RECHERCHIERTE
SACHGEBIETE (Int. Cl.5 )

B29B

Der vorliegende Recherchenbericht wurde für alle Patentansprüche erstellt

| Recherchenort | Abschlußdatum der Recherche | Prüfer |
|---|---|---|
| DEN HAAG | 12 MAI 1992 | PEETERS S. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................
& : Mitglied der gleichen Patentfamilie, übereinstimmendes
    Dokument

EPO FORM 1503 03.82 (P0403)